# EUROPÄISCHE PATENTSCHRIFT

(11) **EP 2 221 506 B1**
(45) Veröffentlichungstag und Bekanntmachung des Hinweises auf die Patenterteilung: **09.05.2012**
(21) Anmeldenummer: 10153866.8
(22) Anmeldetag: 17.02.2010
(51) Int. Cl.: F16H 25/22

(54) **Umlenkkörper für einen Kugelgewindetrieb**
Recirculation member for ball screw drive
Élément de recirculation pour entraînement à vis à billes

(30) Priorität: 18.02.2009 DE 102009009522
(43) Veröffentlichungstag der Anmeldung: 25.08.2010
(73) Patentinhaber: Schaeffler Technologies AG & Co. KG, 91074 Herzogenaurach (DE)
(72) Erfinder: Adler, Dieter, 91074, Herzogenaurach (DE); Kreutzer, Mario, 96515, Sonneberg (DE)

(56) Entgegenhaltungen:
- DE-A1-102004 023 354
- JP-A- 2005 069 264
- US-A- 5 005 436
- US-A- 5 555 770
- US-A1- 2003 062 719

## Beschreibung

### Gebiet der Erfindung

Die Erfindung betrifft einen Umlenkkörper für einen Kugelgewindetrieb, bestehend aus zwei miteinander zu verbindenden Körperteilen, die einen Wälzkörper führenden Umlenkkanal begrenzen.

### Hintergrund der Erfindung

Ein Umlenkkörper gemäß dem Oberbegriff des Anspruchs 1 ist aus der DE 10 2004 023 354 A1 bekannt.

Ein Kugelgewindetrieb, wie er beispielsweise aus DE 10 2004 023 353 A1 bekannt ist, umfasst eine mit einem Außengewinde versehene Gewindespindel, eine auf dieser sitzende, mit einem Innengewinde versehene Gewindemutter sowie in dem oder den über die Gewinde gebildeten Kugelkanälen geführte Kugeln, auf denen die Gewindemutter läuft. An der Gewindemutter ist wenigstens ein Umlenkkörper vorgesehen, der dazu dient, die Kugeln kontinuierlich zurückzusetzen, also einen oder mehrere Gänge in axialer Richtung gesehen zurückzuführen, damit die Kugeln bei einer hinreichenden Mutternverstellung nicht herausfallen. Der Umlenkkörper ist in die Mutter eingesetzt, wird also mit dieser bewegt. Er weist einen Umlenkkanal auf, mit einem Einlaufabschnitt, in den die Kugeln aus dem Kugelkanal kommend einlaufen, dem eigentlichen axial versetzenden Kanalabschnitt sowie einem Auslaufabschnitt, über den die Kugeln wieder in den Kugelkanal einlaufen.

Neben einteiligen Umlenkkörpern ist beispielsweise aus DE 10 2004 023 353 A1 auch ein zweiteiliger Umlenkkörper bestehend aus einem ersten und einem zweiten Körperteil bekannt. An den beiden in der Regel aus Kunststoff gefertigten Körperteilen ist jeweils eine Umlenkkanalhälfte vorgesehen, die einander beim Zusammenfügen den Umlenkkanal bildend ergänzen. Aus Gründen der Transportsicherung, damit zwei einen Umlenkkörper bildende Körperteile also nicht lose vorliegen und verloren gehen können, sowie aus Gründen der Montierbarkeit in die Gewindemutter werden die Körperteile fest miteinander verbunden, wozu bei bekannten zweiteiligen Umlenkkörpern an den einzelnen Körperteilen zylindrische vorspringende Zapfen und diese aufnehmende zylindrische Zapfenlöcher an den jeweils einander gegenüberliegenden, miteinander zu verbindenden Stirnflächen der Körperteile vorgesehen sind. Der Durchmesser der Zapfen ist etwas größer als der Durchmesser der Zapfenaufnahmen. Die Verbindung erfolgt dadurch, dass die beiden Körperteile miteinander ultraschallverschweißt werden. Hierzu werden die Körperteile im Bereich der Stirnfläche, insbesondere das Körperteil, das die Zapfen aufweist, im Bereich der Zapfen, mit einem geeigneten Ultraschallschweißgerät erhitzt, so dass das Kunststoffmaterial weich wird. Dies ermöglicht es, die vom Durchmesser her etwas größeren, nunmehr jedoch weichen und verformbaren Zapfen in die vom Durchmesser her etwas kleineren Zapfenaufnahmen einzuführen. Die Erwärmung wird solange fortgesetzt, bis die Zapfen vollständig eingeführt bzw. die Körperteile vollständig zusammengeführt sind. Das erwärmte, weiche Kunststoffmaterial härtet hiernach wiederum aus, so dass eine feste, quasi stoffflüssige Verbindung zwischen den Zapfen und dem umliegenden Körpermaterial gegeben ist. Nach diesem Schweißvorgang ist es erforderlich, die Verbindung zu prüfen, um sicherzugehen, dass die beiden Körperteile auch lageexakt miteinander verbunden sind und die Schweißung erfolgreich war. Diese Verbindungsweise ist aufwendig, es sind spezielle Vorkehrungen für das Schweißen und die nachfolgende Prüfung zu treffen, was einerseits einen beachtlichen Zeitaufwand, andererseits auch einen beachtlichen Kostenaufwand mit sich bringt.

### Zusammenfassung der Erfindung

Der Erfindung liegt damit das Problem zugrunde, einen zweiteiligen Umlenkkörper anzugeben, dessen Körperteile auf einfachere Weise fest, also transportsicher und zur Montage geeignet miteinander verbunden werden können.

Zur Lösung dieses Problems ist bei einem Umlenkkörper der eingangs genannten Art erfindungsgemäß vorgesehen, dass an einem oder beiden Körperteilen Rast- oder Klemmvorsprünge vorgesehen sind, die in am anderen Körperteil vorgesehene Rast- oder Klemmaufnahmen in der zusammengesetzten Endstellung formschlüssig verrasten oder reibschlüssig verklemmen.

Bei dem erfindungsgemäßen Kunststoffkörper werden die beiden Körperteile rein mechanisch aneinander fixiert, derart, dass sie axial im Falle des Verrastens nicht mehr bzw. nur unter aufwendigem Lösen der Rastverbindung und im Falle der Verklemmung nur unter erhöhtem Kraftaufwand auseinandergezogen werden können. Infolge der Verrastung oder Verklemmung ist die benötigte feste Verbindung, die einen einfach Transport wie auch eine einfache Montage ermöglicht, realisiert. Die zum Verschnappen oder Verrasten benötigten Rast- oder Klemmvorsprünge wie auch die entsprechenden Rast- oder Klemmaufnahmen können bei einer üblicherweise durch Kunststoffspritzen erfolgenden Herstellung der Körperteile ohne Weiteres durch entsprechende Ausbildung der Spritzformen hergestellt werden. Die Verbindung der Körperteile ist jedoch durch bloßes Ineinanderstecken deutlich einfacher möglich, auf das aufwendige Ultraschallschweißen kann mit besonderem Vorteil verzichtet werden, was die Bindung wesentlich schneller und kostengünstig ermöglicht.

Sind als Fixierelemente Rastvorsprünge vorgesehen, so sind diese zweckmäßigerweise als federnde Rastnasen ausgebildet, die in entsprechend hinterschnittene Rastaufnahmen einrasten. Erfindungsgemäß werden zwei oder mehr Rastnasen nebeneinander angeordnet und greifen in eine gemeinsame Rastaufnahme ein. Es bietet sich hier an, beispielsweise drei oder vier Rastnasen in kreisförmiger Anordnung respektive mit kreisförmiger Geometrie im Bereich ihrer Rastabschnitte anzuordnen und auszuführen, die in eine runde hinterschnittene Aufnahme greifen. Auch können nur zwei solcher Rastnasen nebeneinander vorgesehen werden, die im Bereich ihrer Rastabschnitte rundlich ausgeführt sind und mit einer kreisrunden Rastaufnahme zusammenwirken, wie natürlich auch eckige Rastnasen respektive Rastabschnitte und eckige Rastaufnahmen realisiert werden können.

Werden Klemmvorsprünge als Fixierelemente vorgesehen, so sind diese zweckmäßigerweise als federnde Klemmzungen ausgebildet, wobei zwei oder mehr Klemmzungen nebeneinander angeordnet sind und in eine gemeinsame Klemmaufnahme greifen. Auch hier bietet sich eine quasi kreisförmige Anordnung der Klemmzungen respektive eine gebogene Ausbildung ihrer Klemmflächen sowie eine kreisförmige Klemmaufnahme an.

Wenngleich grundsätzlich die Möglichkeit besteht, die Rast- oder Klemmvorsprünge und die Rast- und Klemmaufnahmen so auszubilden, dass sie nur geringe Fertigungstoleranzen aufweisen und selbst eine Zentrierung der Körperteile beim Zusammenfügen ermöglichen, sieht eine zweckmäßige Weiterbildung der Erfindung vor, an beiden Körperteilen Zentrierelemente vorzusehen. Über diese Zentrierelemente, die beispielsweise etwas früher als die Rast- oder Klemmteile miteinander in Verbindung treten, wenn die Körperteile zusammengesetzt werden, oder auch gleichzeitig mit diesen ineinander greifen, wird eine exakte Ausrichtung der Körperteile zueinander ermöglicht. Ferner ist es nicht erforderlich, bei der Ausbildung der Rast- oder Klemmvorsprünge bzw. Rast- und Klemmaufnahmen auf eine hohe Toleranz zu achten.

Die Zentrierelemente können als zapfenartige Vorsprünge ausgebildet sein und beim Zusammensetzen der Körperteile mit entsprechenden Zentrierführungen zusammenwirken. Hierbei sind zwei unterschiedliche Ausgestaltungen denkbar. Zum einen können die Zentrierführungen als Sacklöcher ausgeführt sein, die also als geschlossene, hohlzylindrische Bohrungen in das Material eines Körperteils laufen und in die die Vorsprünge vollständig eingreifen. Alternativ besteht auch die Möglichkeit, die Zentrierführungen als seitlich offene, nutförmige Eintiefungen an der Außenseite eines Körperteils auszubilden, in die die Zentriervorsprünge eingeschoben werden.

Die Verrastung respektive Verklemmung führt zu einer festen und weitgehend dichten Verbindung respektive Anlage der beiden Körperhälften aneinander, so dass es im Betrieb des Kugelgewindetriebs zu keinem oder nur einem unwesentlichen Schmiermittelaustritt kommt. Um einen Schmiermittelaustritt aus dem Umlenkkanal zwischen den Körperteilen hierdurch nun vollständig zu unterbinden sieht eine zweckmäßige Weiterbildung der Erfindung vor, an einem Körperteil und seiner zum anderen Körperteil weisenden Stirnseite ein sich zumindest über einen Teil der Länge der Stirnseite, gegebenenfalls über die gesamte Länge erstreckender Vorsprung vorgesehen ist, der das andere Körperteil formschlüssig übergreift. Dieser Vorsprung übergreift das oder überlappt mit dem anderen Körperteil, d. h., dass der Verbindungsbereich zwischen den Körperteilen von diesem Vorsprung zusätzlich übergriffen ist, wobei der Vorsprung formschlüssig, also dichtend an dem anderen Körperteil anliegt. Zweckmäßigerweise ist am anderen Körperteil eine stirnseitige Nut oder Eintiefung vorgesehen, in die der Vorsprung greift. Der Vorsprung ist also quasi in Verlängerung der Außenseite des einen Körperteils an dessen Stirnseite vorgesehen, an dem anderen Körperteil ist eine entsprechende Eintiefung oder Nut, in die der Vorsprung beim Zusammenschieben geführt wird. Dies führt dazu, dass trotz Übergriffs eine flächige, homogene Außenseite gegeben ist.

Neben dem Umlenkkörper selbst betrifft die Erfindung ferner einen Kugelgewindetrieb umfassend eine Gewindespindel und eine auf dieser über Kugeln gelagerte bewegbare Gewindemutter, an der wenigstens ein Umlenkkörper der erfindungsgemäßen Art vorgesehen ist.

### Kurze Beschreibung der Zeichnung

Ein Ausführungsbeispiel der Erfindung ist in der Zeichnung dargestellt und wird im Folgenden näher beschrieben. Es zeigen:
- Figur 1: einen Umlenkkörper bestehend aus zwei Körperteilen vor dem Zusammenschieben;
- Figur 2: eine Perspektivansicht eines der Körperteile aus Figur 1;
- Figur 3: eine Aufsicht auf einen Umlenkkörper einer zweiten, nicht beanspruchten Ausführungs- form;
- Figur 4: eine Ansicht eines Körperteils aus Figur 3;
- Figur 5: eine Aufsicht auf einen Umlenkkörper einer erfindungsgemäßen dritten Ausführungsform;
- Figur 6: eine Teilansicht eines Umlenkkörpers im Schnitt mit einander überlappender Körperteile.

### Ausführliche Beschreibung der Zeichnung

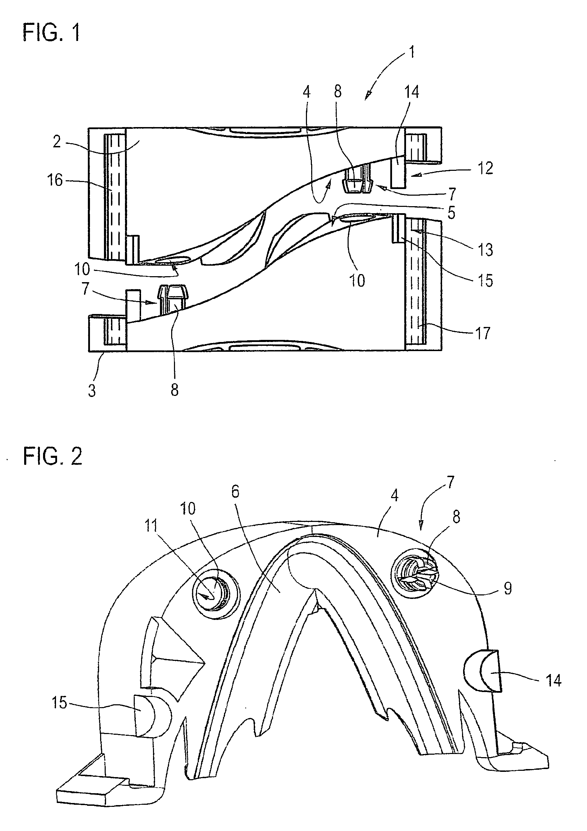

Figur 1 zeigt einen erfindungsgemäßen Umlenkkörper 1 bestehend aus einem ersten Körperteil 2 und einem zweiten Körperteil 3. An den Stirnflächen 4, 5 eines jeden Körperteils 2, 3 ist ein Kanalabschnitt 6 vorgesehen, wobei sich in der zusammengesetzten Stellung die beiden Kanalabschnitte 6 auf einem Umlenkkanal ergänzen. Figur 1 zeigt die beiden Körperteile 2, 3 in der getrennten Stellung.

Um die Körperteile 2, 3 fest miteinander zu verbinden, was aus Transportgründen und zu Montagezwecken erforderlich ist, sind bei dem in den Figuren 1 und 2 gezeigten Ausführungsbeispiel an jeder Stirnseite 4, 5 an einer Seite mehrere Rastvorsprünge 7 ausgebildet, bei denen es sich um federnde Rastnasen 8 handelt. Im gezeigten Ausführungsbeispiel sind jeweils vier Rastnasen 8 benachbart angeordnet. Ihre oberseitigen Rastabschnitte 9 ergänzen sich zu einer runden, quasi pilzförmigen Geometrie. Nachdem die Rastnasen 8 wie auch die Körperteile 2, 3, selbst aus Kunststoff sind, sind sie zwangsläufig leicht federnd und können in entsprechenden Rastaufnahmen verschnappen.

Eine entsprechende Rastaufnahme 10 ist an der jeweils gegenüberliegenden Stirnfläche 4, 5 eines jeden Körperteils 2, 3, ausgeführt. Die Rastaufnahme 10 weist eine entsprechende Hinterschneidung 11 auf. Zum Zusammensetzen werden nun die beiden Körperteile 2, 3 axial zueinander bewegt, so dass die Rastnasen 8 in die jeweils gegenüberliegende Rastaufnahme 10 eingeführt werden. Hierbei werden die leicht schräg verlaufenden Rastabschnitte 9 infolge ihrer Geometrie von der hinterschnittenen Rastaufnahme 10 nach innen gedrückt, d. h., der Durchmesser der Rastaufnahme 10 ist kleiner als der Durchmesser der Rastnasegruppe bzw. ihrer kreisförmigen Anordnung. Sie werden also leicht nach innen bzw. aufeinander zu gebogen. Mit Erreichen der Endstellung, wenn also die beiden Stirnflächen 4, 5 aufeinanderliegen, hinreifen die Rastabschnitte 9 die jeweilige Hinterschneidung 11, federn also wieder in ihre Ausgangsstellung. Die beiden Körperteile 2, 3 sind folglich fest miteinander verrastet, wobei jeweils eine Verraststelle am Körperteile 2 und eine andere Verraststelle am Körperteil 3 realisiert ist.

Selbstverständlich ist es auch möglich, beispielsweise nur zwei oder drei Rastnasen 8 vorzusehen, bevorzugt sind ihre Rastabschnitte 9 dann ebenfalls kreisbogenförmig ausgeführt, um mit einer zylindrischen Rastaufnahme 10 zusammenzuwirken.

Um eine Zentrierung zu ermöglichen, über die sichergestellt wird, dass die beiden Körperteile 2, 3 exakt zueinander positioniert und die Rastvorsprünge 7 in die Rastaufnahmen 10 eingeführt werden, sind an beiden Körperteilen 2, 3 Zentrierelemente 12, 13 vorgesehen. Bei den Zentrierelementen 12 handelt es sich um Vorsprünge 14, wobei jeweils ein Vorsprung an einem Körperteil 2, 3 vorgesehen ist. Die Zentrierelemente 13 sind als nach außen bzw. randseitig offene Zentrierführungen 15 ausgeführt. Die Geometrie der Zentriervorsprünge 14, die zapfenförmig sind, entspricht der Geometrie der Zentrierführungen 15, so dass eine lage- und passgenaue Zentrierung respektive Führung ermöglicht wird.

In der verrasteten Stellung liegen die Stirnflächen 4, 5 im Wesentlichen spaltfrei aneinander an. D. h., dass eine im Wesentlichen dichte Anlage realisiert ist, so dass kein nennenswerter Schmiermitteldurchtritt durch den Spalt zu besorgen ist.

Seitlich sind an den Körperteilen 2, 3 Nuten 16, 17 vorgesehen, in die entsprechende Halteklammern eingreifen, um die Umlenkkörper 1 in einer Gewindemutter zu fixieren. Die Halteklammer läuft zu einem anderen Umlenkkörper und verspannt diesen mit ihrem anderen Ende.

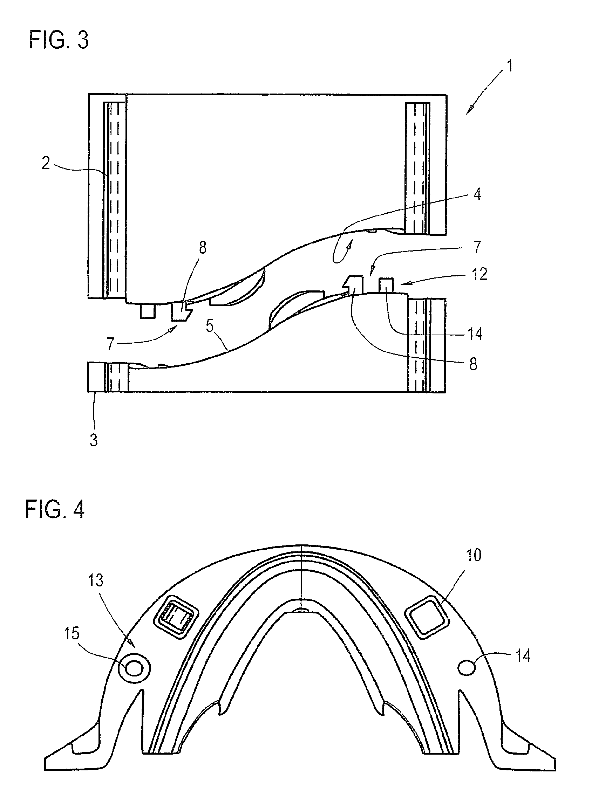

Die Figuren 3 und 4 zeigen eine weitere, nicht beanspruchte Ausführungsform eines Umlenkkörpers 1, wobei für gleiche Bauteile gleiche Bezugszeichen verwendet werden. Auch hier kommen zwei Körperteile 2, 3 zum Einsatz, wobei an jeweils einer Stirnfläche 4, 5 jeweils ein Rastvorsprung 7 in Form jeweils einer Rastnase 8 vorgesehen ist. An der jeweils gegenüberliegenden Stirnseite ist eine wiederum hinterschnittene Rastaufnahme 10 vorgesehen, die im gezeigten Beispiel, nachdem es sich um jeweils eine Rastnase handelt, hier im Wesentlichen rechteckiger Form ist. Auch hier kommt es also zur Teilefixierung zu einer echten mechanischen Rastverbindung, wenn die beiden Körperteile 2, 3 in ihrer Endstellung sind.

Auch hier sind Zentrierelemente 12, 13 vorgesehen, wobei das jeweilige Zentrierelement 12, von denen auch hier jeweils eines an einem Körperteil 2, 3 vorgesehen ist, wiederum als zapfenförmiger Vorsprung 14 ausgeführt ist, während das andere Zentrierelement hier als hohlzylindrische Sack- oder Durchgangsbohrung 15 ausgeführt ist. Hier liegt also die Zentrierbohrung im Körperteil, während sie bei der Ausführungsform gemäß Fig. 2 randseitig vorgesehen ist.

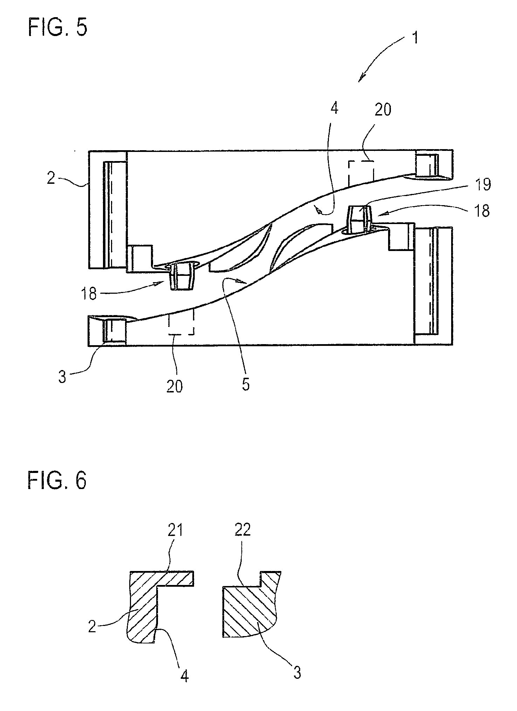

Figur 5 zeigt einen weiteren erfindungsgemäßen Umlenkkörper 1 bestehen aus den Körperteilen 2, 3, wobei hier - anders als bei den anderen Ausführungsformen - Klemmvorsprünge 18 an jeweils einer Stirnseite 4, 5 vorgesehen ist. Die Klemmvorsprünge 18 sind hier als federnde Klemmzungen 19 ausgeführt, wobei auf diese Klemmzungen, beispielsweise jeweils drei oder vier davon, in einem wesentlichen kreis- oder pilzförmigen Anordnung vorgesehen sind bzw. ihre Außenseite gebogen ausgeführt sind. Sie weisen eine leicht gewinkelte Außenfläche auf.

An der gegenüberliegenden Stirnseite ist jeweils eine Klemmaufnahme 20 vorgesehen, die hier lediglich gestrichelt dargestellt ist. Zum Verbinden der Körperteile 2, 3 werden die Klemmvorsprünge 18 bzw. die Klemmzungen 19 in die Klemmaufnahme 20 eingeführt. Der Innendurchmesser der hohlzylindrischen Klemmaufnahmen 20 ist kleiner als der Außendurchmesser der federnden Klemmzungenanordnung. Beim Einführen kommt es dazu, dass die Klemmzungen 19 nach innen federn, geführt von der Wandung der Klemmaufnahme 20. Es kommt zu einer festen, reibschlüssigen Verbindung, die beide Körperteile 2, 3 axial fixiert. Die Zentrierung erfolgt hier direkt über die Klemmvorsprünge 18 und die Klemmaufnahmen 20, zusätzliche Zentrierelemente sind hier nicht erforderlich.

Figur 6 zeigt schließlich in Form einer Prinzipdarstellung Teilansichten der Körperteile 2, 3, wobei hier am Körperteil 2 ein zumindest über einen Teil der Länge der Stirnfläche 3 verlaufender schmaler randseitiger Vorsprung 21 vorgesehen ist. Am Körperteil 3 ist eine entsprechende Eintiefung und Nut 22 vorgesehen. In der Montagestellung ist der Vorsprung 21 formschlüssig in der Eintiefung oder Nut 22 aufgenommen. Hierüber wird eine zusätzliche Sicherung gegen einen Schmiermittelaustritt in diesem Bereich realisiert.

Die Körperteile 2, 3 sind wie bereits ausgeführt bevorzugt aus Kunststoff, vorzugsweise in einem Spritzgussverfahren, hergestellt. Dies ermöglicht es auf einfache Weise, die Rast- oder Klemmvorsprünge 7, 18 sowie die Rast- oder Klemmaufnahmen 10, 20 auszubilden.

### Bezugszahlenliste

- 1: Umlenkkörper
- 2: Körperteil
- 3: Körperteil
- 4: Stirnfläche
- 5: Stirnfläche
- 6: Kanalabschnitt
- 7: Rastvorsprung
- 8: Rastnase
- 9: Rastabschnitt
- 10: Rastaufnahme
- 11: Hinterschneidung
- 12: Zentrierelement
- 13: Zentrierelement
- 14: Vorsprung
- 15: Zentrierführung
- 16: Nut
- 17: Nut
- 18: Klemmvorsprung
- 19: Klemmzunge
- 20: Klemmaufnahme
- 21: Vorsprung
- 22: Nut

## Patentansprüche

1. Umlenkkörper (1) für einen Kugelgewindetrieb, bestehend aus zwei miteinander zu verbindenden Körperteilen (2, 3), die einen Wälzkörper führenden Umlenkkanal begrenzen, wobei an einem oder beiden Körperteilen (2, 3) Rastvorsprünge (7) vorgesehen sind, die in am anderen Körperteil (2, 3) vorgesehene Rastaufnahmen (10) in der zusammengesetzten Endstellung formschlüssig verrasten, **dadurch gekennzeichnet, dass** die Rastvorsprünge (7) als federnde Rastnasen (8) ausgebildet sind, die in entsprechend hinterschnittene Rastaufnahmen (10) einrasten, und wobei zwei oder mehr Rastnasen (8) nebeneinander angeordnet sind und in eine gemeinsame Rastaufnahme eingreifen.

2. Umlenkkörper (1) für einen Kugelgewindetrieb, bestehend aus zwei miteinander zu verbindenden Körperteilen (2 ,3) die einen Wälzkörper führenden Umlenkkanal begrenzen, wobei an einem oder beiden Körperteilen (2, 3) Klemmvorsprünge (18) vorgesehen sind, die in am anderen Körperteil (2, 3) vorgesehene Klemmaufnahmen (20) in der zusammengesetzten Endstellung reibschlüssig verklemmen, **dadurch gekennzeichnet, dass** die Klemmvorsprünge (18) als federnde Klemmzungen (19) ausgebildet sind, wobei zwei oder mehr Klemmzungen (19) nebeneinander angeordnet sind und in eine gemeinsame Klemmaufnahme (20) eingreifen.

3. Umlenkkörper (1) nach einem der vorangehenden Ansprüche, **dadurch gekennzeichnet, dass** an beiden Körperteilen (2, 3) Zentrierelemente (12, 13) vorgesehen sind.

4. Umlenkkörper (1) nach Anspruch 3, **dadurch gekennzeichnet, dass** die Zentrierelemente (12, 13) als zapfenartige Vorsprünge (14) ausgebildet sind und die beim Zusammensetzen der Körperteile (2, 3) mit Zentrierführungen (15) zusammenwirken.

5. Umlenkkörper (1) nach Anspruch 4, **dadurch gekennzeichnet, dass** die Zentrierführungen (15) als Sacklöcher oder als seitlich offene Eintiefungen an der Außenseite eines Körperteils (2, 3) ausgeführt sind.

6. Umlenkkörper (1) nach einem der vorangehenden Ansprüche, **dadurch gekennzeichnet, dass** an einem Körperteil (2) an seiner zum anderen Körperteil (3) weisenden Stirnseite (4) ein sich zumindest über einen Teil der Länge der Stirnseite (4), vorzugsweise über die gesamte Länge erstreckender Vorsprung (21) vorgesehen ist, der das andere Körperteil (3) formschlüssig übergreift.

7. Umlenkkörper (1) nach Anspruch 6, **dadurch gekennzeichnet, dass** am anderen Körperteil (3) eine stirnseitige Nut oder Eintiefung (22) vorgesehen ist, in die der Vorsprung (21) greift.

8. Kugelgewindetrieb umfassend eine Gewindespindel und eine auf dieser über Kugeln gelagerte bewegbare Gewindemutter, an der wenigstens ein Umlenkkörper (1) nach einem der vorangehenden Ansprüche vorgesehen ist.

## Claims

1. Deflecting body (1) for a ball screw, comprising two body parts (2, 3) to be connected to one another which delimit a deflecting channel which guides rolling bodies, with latching projections (7) being provided on one or both body parts (2, 3), which latching projections (7), in the assembled final position, latch in a positively locking manner in latching receptacles (10) provided on the other body part (2, 3), **characterized in that** the latching projections (7) are designed as resilient latching lugs (8) which latch into correspondingly undercut latching receptacles (10), and with two or more latching lugs (8) being arranged adjacent to one another and engaging into a common latching receptacle.

2. Deflecting body (1) for a ball screw, comprising two body parts (2, 3) to be connected to one another which delimit a deflecting channel which guides rolling bodies, with jamming projections (18) being provided on one or both body parts (2, 3), which jamming projections (18), in the assembled final position, are jammed in a frictionally engaging manner in jamming receptacles (20) provided on the other body part (2, 3), **characterized in that** the jamming projections (18) are designed as resilient jamming tongues (19), with two or more jamming tongues (19) being arranged adjacent to one another and engaging into a common jamming receptacle (20).

3. Deflecting body (1) according to one of the preceding claims, **characterized in that** centering elements (12, 13) are provided on both body parts (2, 3).

4. Deflecting body (1) according to Claim 3, **characterized in that** the centering elements (12, 13) are designed as peg-like projections (14) which interact with centering guides (15) as the body parts (2, 3) are assembled.

5. Deflecting body (1) according to Claim 4, **characterized in that** the centering guides (15) are designed as blind holes or as recesses, which are open to the side, on the outer side of a body part (2, 3).

6. Deflecting body (1) according to one of the preceding claims, **characterized in that** one body part (2) has provided on it, on its end side (4) which points toward the other body part (3), a projection (21) which extends at least over a part of the length of the end side (4), preferably over the entire length, and which engages in a positively locking manner over the other body part (3).

7. Deflecting body (1) according to Claim 6, **characterized in that** the other body part (3) has provided on it an end-side groove or recess (22) into which the projection (21) engages.

8. Ball screw comprising a threaded spindle and a threaded nut which is movably mounted on said threaded spindle by means of balls, on which is provided at least one deflecting body (1) according to one of the preceding claims

## Revendications

1. Corps de renvoi (1) pour une vis d'entraînement à billes, constitué de deux parties de corps (2, 3) à relier l'une à l'autre qui délimitent un canal de renvoi guidant des corps de roulement, des saillies d'encliquetage (7) étant prévues sur une des parties de corps (2, 3) ou sur les deux, lesquelles saillies d'encliquetage s'encliquètent par engagement positif, dans la position d'extrémité assemblée, dans des logements d'encliquetage (10) prévus sur l'autre partie de corps (2, 3), **caractérisé en ce que** les saillies d'encliquetage (7) sont réalisées en tant qu'ergots d'encliquetage (8) élastiques qui s'encliquètent dans des logements d'encliquetage (10) en contre-dépouille de manière correspondante, et deux ou plus de deux ergots d'encliquetage (8) étant disposés côte à côte et venant en prise dans un logement d'encliquetage commun .

2. Corps de renvoi (1) pour une vis d'entraînement à billes, constitué de deux parties de corps (2, 3) à relier l'une à l'autre qui délimitent un canal de renvoi guidant des corps de roulement, des saillies de serrage (18) étant prévues sur une partie de corps (2, 3) ou sur les deux, lesquelles saillies de serrage se bloquant par serrage par engagement par friction, dans la position d'extrémité assemblée, dans des logements de serrage (20) prévus sur l'autre partie de corps (2, 3), **caractérisé en ce que** les saillies de serrage (18) sont réalisées en tant que langues de serrage (19) élastiques, deux ou plus de deux langues de serrage (19) étant disposées côte à côte et venant en prise dans un logement de serrage (20) commun.

3. Corps de renvoi (1) selon l'une quelconque des revendications précédentes, **caractérisé en ce que** des éléments de centrage (12, 13) sont prévus sur les deux parties de corps (2, 3).

4. Corps de renvoi (1) selon la revendication 3, **caractérisé en ce que** les éléments de centrage (12, 13) sont réalisés en tant que saillies (14) en forme de tourillon, et ces dernières, lors de l'assemblage des parties de corps (2, 3), coopèrent avec des guides de centrage (15).

5. Corps de renvoi (1) selon la revendication 4, **caractérisé en ce que** les guides de centrage (15) sont réalisés en tant que trous borgnes ou en tant que renfoncements ouverts latéralement sur le côté extérieur d'une partie de corps (2, 3).

6. Corps de renvoi (1) selon l'une quelconque des revendications précédentes, **caractérisé en ce que** sur une partie de corps (2), sur son côté frontal (4) orienté vers l'autre partie de corps (3), il est prévu une saillie (21) qui s'étend au moins sur une partie de la longueur du côté frontal (4), de préférence sur toute la longueur, et qui vient en prise par engagement positif par-dessus l'autre partie de corps (3).

7. Corps de renvoi (1) selon la revendication 6, **caractérisé en ce qu'**une rainure ou un renfoncement frontal(e) (22) est prévu(e) sur l'autre partie de corps (3), dans laquelle rainure ou lequel renfoncement la saillie s'engage (21).

8. Vis d'entraînement à billes comportant une broche filetée et un écrou fileté mobile monté sur celle-ci au moyen de billes, sur lequel au moins un corps de renvoi (1) selon l'une quelconque des revendications précédentes est prévu.
